# EUROPEAN PATENT APPLICATION

(11) **EP 3 273 430 A1**
(43) Date of publication of application: **24.01.2018**
(21) Application number: 17180978.3
(22) Date of filing: 12.07.2017
(51) Int. Cl.: G09B 23/34

(54) **THREE-DIMENSIONAL COMPONENTS AND METHOD OF THREE-DIMENSIONAL PRINTING OF COMPONENTS FOR CRASH TEST DUMMY**

(30) Priority: 19.07.2016 US 201662364098 P; 13.10.2016 US 201615293100; 17.10.2016 US 201662409259 P; 02.12.2016 US 201615368181
(71) Applicant: Humanetics Innovative Solutions, Inc., Plymouth, MI 48170 (US)
(72) Inventor: VARA, Thomas Matthew, Norwalk, OH Ohio 44857 (US); UBOM, Ime Victor, Southfield, MI Michigan 48075 (US); BEEBE, Michael Scott, Norwalk, OH Ohio 44857 (US)
(74) Representative: Wilson, Alan Stuart

(57) **Abstract**

A three-dimensional printed component of a crash test dummy includes at least one material and the at least one material being printed by three-dimensional printing from a CAD model to form the three-dimensional printed component for different performance requirements for the crash test dummy.

## Description

### BACKGROUND OF THE INVENTION

### 1. Field of the Invention

The present invention relates generally to crash test dummies and, more particularly, to three-dimensional printed components and a method of three-dimensional printing of components of a crash test dummy.

### 2. Description of the Related Art

Automotive, aviation, and other vehicle manufacturers conduct a wide variety of collision testing to measure the effects of a collision on a vehicle and its occupants. Through collision testing, a vehicle manufacturer gains valuable information that can be used to improve the vehicle, authorities examine vehicles to submit type approval, and consumer organizations provide information on vehicle safety ratings to the public.

Collision testing often involves the use of anthropomorphic test devices, better known as "crash test dummies", to estimate a human's injury risk. The dummy must possess the general mechanical properties, dimensions, masses, joints, and joint stiffness of the humans of interest. In addition, they must possess sufficient mechanical impact response similitude and sensitivity to cause them to interact with the vehicle's interior in a human-like manner.

The crash test dummy typically includes components such as a head assembly, spine assembly (including neck), rib cage assembly, abdominal assembly, pelvis assembly, right and left arm assemblies, and right and left leg assemblies. These assemblies typically include subcomponents. For example, the rib cage assembly includes a plurality of components such as ribs. The ribs are typically connected to the spine assembly.

Three-dimensional (3D) printers and rapid prototyping (RP) systems are currently used primarily to quickly produce objects and prototype parts from 3D computer-aided design (CAD) tools. Most RP systems use an additive, layer-by-layer approach to building parts by joining liquid, powder, or sheet materials to form physical objects. The data referenced in order to create the layers is generated from the CAD system using thin, horizontal cross-sections of a CAD model.
Currently, components are made by designing and physically constructing the components. As an example, for the ribs of the crash test dummy, this type of construction glues damping material to the inside of a standard 1095 steel band to create the rib. However, it is desirable to make components that are more human-like. Thus, there is a need in the art for new components made by a three-dimensional printing process for a crash test dummy.

### SUMMARY OF THE INVENTION

Accordingly, the present invention is a three-dimensional printed component of a crash test dummy. The three-dimensional printed component for the crash test dummy includes at least one material and the at least one material being printed by three-dimensional printing from a CAD model to form the three-dimensional printed component for different performance requirements for the crash test dummy.

Further, the present invention is a method of making a three-dimensional printed component of a crash test dummy. The method includes the step of providing a three-dimensional printer. The method also includes the steps of making a CAD model of the component and printing, by the three-dimensional printer, from the CAD model at least one material to form the three-dimensional printed component for different performance requirements for the crash test dummy.

In addition, the present invention is a crash test dummy including a body and an assembly operatively attached to the body. The assembly includes a plurality of three-dimensional printed components. Each of the three-dimensional printed components is made of at least one material and the at least one material is printed by three-dimensional printing from a CAD model to form the three-dimensional printed component for different performance requirements for the crash test dummy.

One advantage of the present invention is that new three-dimensional printed components are provided for a crash test dummy. Another advantage of the present invention is that a three-dimensional printing process is used to make components of the crash test dummy more humanlike than ever before. Yet another advantage of the present invention is that the three-dimensional printing process provides the ability to design structures, shapes, and combination of materials to be able to adjust the performance, shorten design cycles, and increase biofidelity of all crash test dummies in use today and in the future. Still another advantage of the present invention is that the three-dimensional printing process allows printing of two different materials at one printing.

Other features and advantages of the present invention will be readily appreciated, as the same becomes better understood, after reading the subsequent description taken in conjunction with the accompanying drawings.

### BRIEF DESCRIPTION OF THE DRAWINGS

FIG. 1 is a perspective view of one embodiment of a crash test dummy, according to the present invention.
FIG. 2 is a side view of the crash test dummy of FIG. 1.
FIG. 3 is a top view of one embodiment of a three-dimensional rib, according to the present invention, for a rib cage assembly of the crash test dummy of FIGS. 1 and 2.
FIG. 4 is a side view of the three-dimensional rib of FIG. 3.
FIG. 5 is a top view of another embodiment of a three-dimensional rib, according to the present invention, for the rib cage assembly of the crash test dummy of FIGS. 1 and 2.
FIG. 6 is a side view of the three-dimensional rib of FIG. 5.
FIG. 7 is a schematic view of one embodiment of a three-dimensional printing system for printing the three-dimensional ribs of FIGS. 3 through 6.
FIG. 8 is a flowchart of a method, according to the present invention, for three-dimensional printing of ribs of FIGS. 3 through 6.
FIG. 9A is a front view of a portion of a crash test dummy having three-dimensional printed components, according to the present invention, made by the three-dimensional printing method of FIG. 8.
FIG. 9B is a side view of a portion of a crash test dummy having three-dimensional components, according to the present invention, made by the three-dimensional printing method of FIG. 8.
FIG. 10A is a perspective view of a crash test dummy incorporating three-dimensional components, according to the present invention, made by the three-dimensional printing method of FIG. 8.
FIG. 10B is another perspective view of a crash test dummy incorporating three-dimensional components, according to the present invention, made by the three-dimensional printing method of FIG. 8.
FIG. 11 is a perspective view of a three-dimensional rib for the rib cage assembly of the crash test dummy of FIGS. 9A, 9B, 10A, and 10B.
FIG. 12 is a perspective view of three-dimensional printed components, flesh, and flexible type components of the crash test dummy of FIGS. 9A, 9B, 10A, and 10B.

### DESCRIPTION OF THE PREFERRED EMBODIMENT(S)

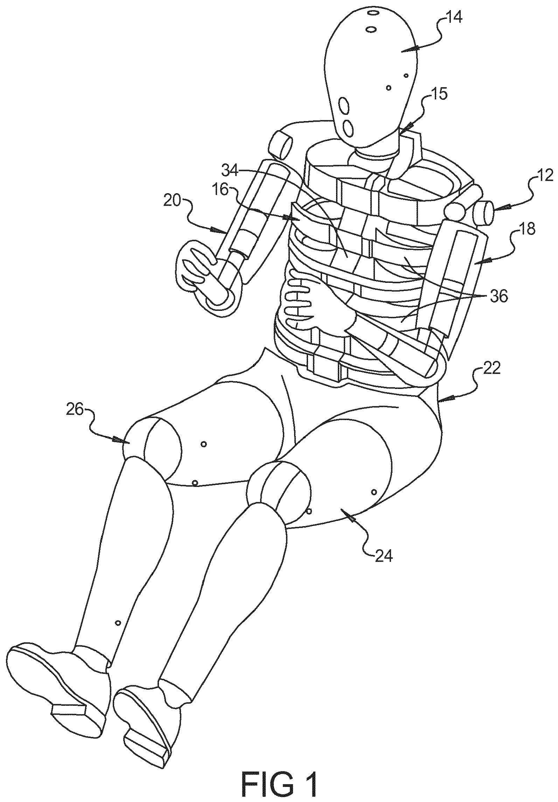

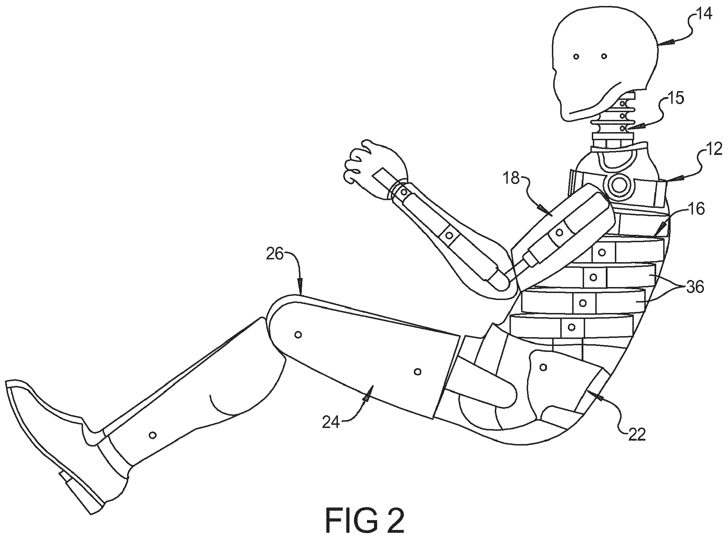

Referring to the drawings and in particular FIGS. 1 and 2, one embodiment of a crash test dummy, generally indicated at 12. The crash test dummy 12 is of a fifth percentile (5%) female type and is illustrated in a sitting position. This crash test dummy 12 is used primarily to test the performance of automotive interiors and restraint systems for adult front and rear seat occupants. The size and weight of the crash test dummy 12 are based on anthropometric studies, which are typically done separately by the following organizations, University of Michigan Transportation Research Institute (UMTRI), U.S. Military Anthropometry Survey (ANSUR), and Civilian American and European Surface Anthropometry Resource (CESAR). It should be appreciated that ranges of motions, centers of gravity, and segment masses simulate those of human subjects defined by the anthropometric data.

As illustrated in FIGS. 1 and 2, the crash test dummy 12 includes components such as a head assembly 14, neck assembly, spine assembly 15, arm assemblies 18, 20, thorax and abdominal assemblies 30, pelvis assembly 22, and leg assemblies 24, 26. It should be appreciated that the assemblies 14, 15, 18, 20, 30, 22, 24, and 26 have subcomponents.

In one embodiment, the head assembly 14 includes a one-piece plastic skull, a brain, an instrumentation core, and a vinyl skin. The instrumentation core is removable for access to head instrumentation contained inside the head assembly 14. The spine assembly 15 has an upper end mounted to the head assembly 14 by a nodding block (not shown) and a nodding joint (not shown). The spine assembly 15 has a lower end extending into a torso area of the crash test dummy 12 and is connected to a spine mounting weldment (not shown) by an adapter assembly (not shown).
The torso area of the crash test dummy 12 includes a torso or rib cage assembly 16 connected to the spine assembly 15. The spine assembly 15 includes a neck assembly connected to the head assembly 14 and a spine box (not shown) connected to the neck assembly. The neck assembly has a lower end connected to by a suitable attachment such as one or more fasteners (not shown) to the spine box. It should be appreciated that the fasteners threadably engage apertures (not shown) in the spine box to secure the neck assembly to the spine box. The crash test dummy 12 also has a pair of arm assemblies including a right arm assembly 18 and a left arm assembly 20, which are attached via shoulders to the crash test dummy 12. The left arm assembly 20 includes a clavicle link (not shown), which connects a clavicle (not shown) to the top of the spine assembly 15. It should be appreciated that the right arm assembly 18 is constructed in a similar manner.

As illustrated in the FIGS. 1 and 2, a lower end of the lumbar spine is connected to a lumbar-thoracic adapter (not shown), which is connected to a lumbar to pelvic adapter (not shown). The pelvis assembly 22 is connected to the adapter and a right leg assembly 24 and a left leg assembly 26 are attached to the pelvis assembly 22. It should be appreciated that various components of the crash test dummy 12 are covered in a urethane skin such as a flesh and skin assembly (not shown) for improved coupling with the skeleton of the crash test dummy 12. It should also be appreciated that a lifting ring (not shown) may be attached to the head assembly 14 for lifting the crash test dummy 12 into and out of test fixtures and vehicles.

The present invention provides a three-dimensional printing process for creating three-dimensional components of the crash test dummy 12. For the head assembly 14, the three-dimensional printing process is used to create or form and adjust a flesh structure for different performance requirements of the crash test dummy 12, create or form an adjustable brain structure to study brain injury, and create or form different skulls for different performance requirements of the crash test dummy 12. For the neck assembly, the three-dimensional printing process is used to create or form different neck structures for different performance requirements of the crash test dummy 12, create or form adjustable structures in nodding blocks, and adjust neck mounting structures for different performance requirements of the crash test dummy 12. For the arm assemblies 18 and 20, the three-dimensional printing process is used to create or form adjustable shoulder component structures for different performance requirements of the crash test dummy 12 and create or form adjustable flesh, bone, and joints for the arm assemblies 18 and 20 for different performance requirements of the crash test dummy 12. For the rib cage and internal organ assemblies 16 and 40, the three-dimensional printing process is used to create or form all types of rib structures for different performance requirements of the crash test dummy 12, create or form organs which can be adjusted to meet different performance requirements of the crash test dummy 12, create or form adjustable structures for all spine components, including lumbar, for different performance requirements of the crash test dummy 12, create or form adjustable structures for flesh for different performance requirements of the crash test dummy 12, and create or form adjustable structures for abdomen for different performance requirements of the crash test dummy 12. For the pelvis assembly 22, the three-dimensional printing process is used to create or form adjustable structures for flesh for different performance requirements of the crash test dummy 12 and create or form different pelvis bones for different performance requirements of the crash test dummy 12. For the leg assemblies 24 and 26, the three-dimensional printing process is used to create or form adjustable structures for flesh for different performance requirements of the crash test dummy 12, create or form different structural bones for different performance requirements of the crash test dummy 12, and create or form different structural knee slider assemblies for different performance requirements of the crash test dummy 12. For muscle, organ, and flesh structures, the three-dimensional printing process is used to create or form and adjust, modify, and combine materials and shapes for organ, muscle and flesh structures. It should be appreciated that the three-dimensional printing process can be used to create or form custom cavities for all data acquisition equipment (not shown) and create or form custom mounting for all sensors (not shown) mounted in the thorax.

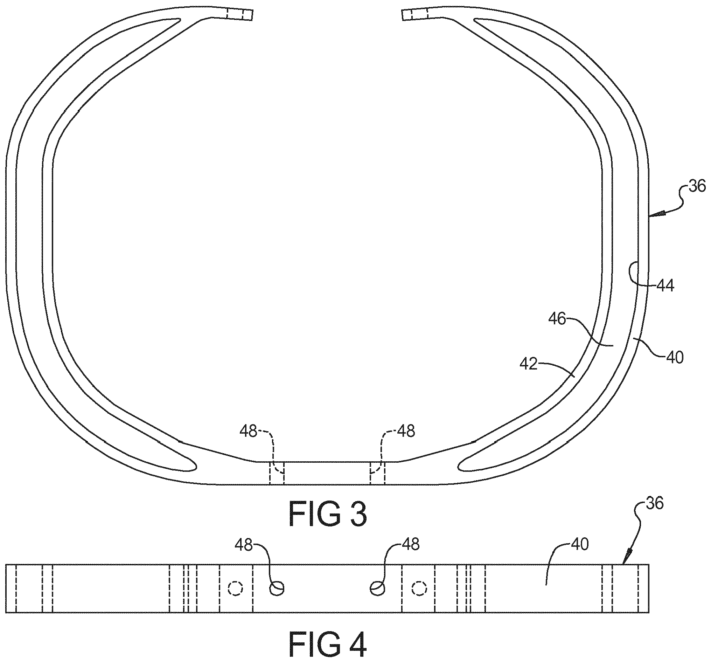

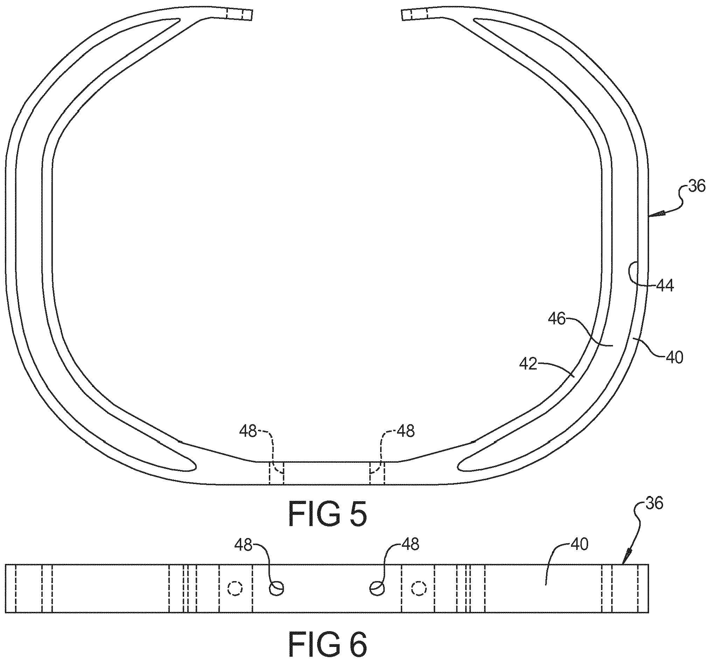

The three-dimensional printing process is used to create or form all types of three-dimensional components for the crash test dummy 12 such as ribs 36. As illustrated in FIGS. 1 and 2, the rib cage assembly 16 includes one or more three-dimensional ribs 36, according to the present invention. The ribs 36 extend between the spine box and a sternum 34. As illustrated in one embodiment in FIGS. 3 and 4 for a rib #3 and another embodiment of FIGS. 5 and 6 for a rib #4, the ribs 36 are generally arcuate and rectangular in shape, but may be any suitable shape. The ribs 36 are vertically spaced along the spine box and sternum 34. The ribs 36 are connected to the spine box and sternum 34 by a suitable mechanism such as fasteners (not shown).

Each of the ribs 36 has a general "C" shape. Each rib 36 has a front layer 40 and a rear layer 42 with an interior 44 spaced therebetween. The front layer 40 and rear layer 42 are made of a band material. Each layer 40 and 42 has a thickness from approximately 2.0 millimeters to approximately 6.0 millimeters, preferably approximately 4.0 millimeters. Each rib 36 includes a layer of damping material 46 disposed or sandwiched in between the two layers 42 and 44. The damping material has a thickness from approximately 8.0 millimeters to approximately 10.0 millimeters, preferably approximately 9.5 millimeters. Each rib 36 includes at least one, preferably a plurality of apertures 48 to allow fasteners (not shown) to extend therethrough for connection of the rib cage assembly 16 to the crash test dummy 12. The printable materials for the rib are commercially available from Stratasys Ltd., 7665 Commerce Way, Eden Prairie, Minnesota, 55344. It should be appreciated that the materials are either FDM Thermoplastics or Polyjet Photopolymers of Stratasys Ltd. It should also be appreciated that the dimensions and thicknesses of the ribs 36 will vary depending on the crash test dummy. It should also be appreciated that this concept could be applied to other rib designs as well, for example, bigger, smaller, and different shapes.

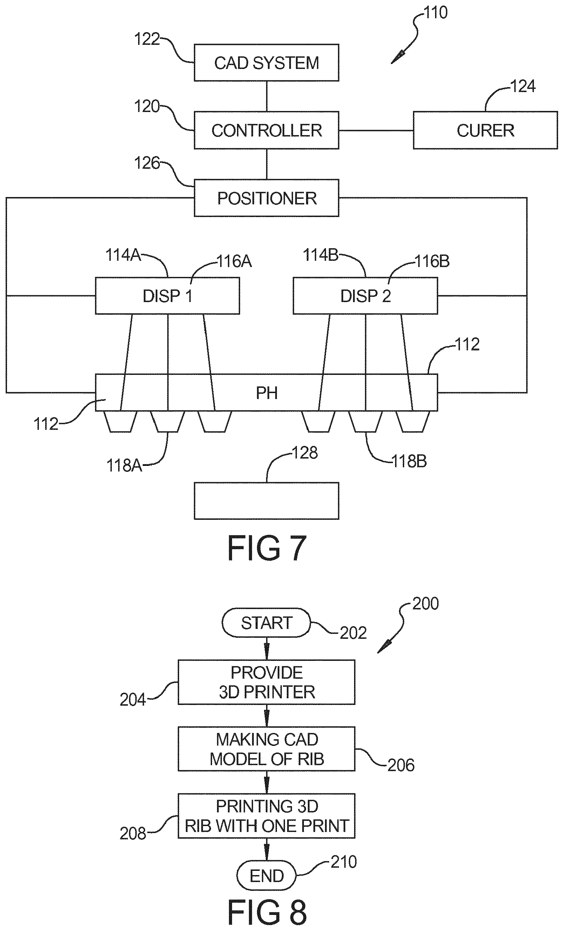

Referring to FIG. 7, a three-dimensional printer or printing system, generally designated 100, includes one or more printing heads 112, and at least two dispensers 114 and individually referenced 114a and 114b, containing printable materials, generally referenced 116 and individually referenced 116a and 116b, respectively. It should be appreciated that other components, and other sets of components, may be used.

The printing head 112 has a plurality of ink-jet type nozzles 118, through which printable materials 116a and 116b are jetted. In one embodiment, the first dispenser 114a is connected to a first set of nozzles 118a, and second dispenser 114b is connected to a second set of nozzles 118b. Thus first printable material 116a is jetted through the nozzles 118a, and the second printable material 116b is jetted through nozzles 118b. In another embodiment (not shown), the three-dimensional printing system 110 may include at least two printing heads 112. The first printing head 112 is connected to first dispenser 114a and is used to jet first printable material 116a; and the second printing head 112 is connected to second dispenser 114b is used to jet second printable material 116b.

The three-dimensional printing system 110 further includes a controller 120, a Computer Aided Design (CAD) system 122, a curing unit 124, and optionally a positioning apparatus 126. The controller 120 is coupled to the CAD system 122, curing unit 124, positioning apparatus 126, printing head 112 and each of the dispensers 114. It should be appreciated that control may be effected by other units than shown, such as one or more separate units.

The three-dimensional rib 36 is built in layers, the depth of each layer typically being controllable by selectively adjusting the output from each of the ink-jet nozzles 118.

By combining or mixing materials from each of the dispensers 114, wherein each dispenser 114 contains printable material having a different hardness, it is possible to adjust and control the hardness of the material forming the three-dimensional rib 36 being produced. Thus, by combining the first and second interface materials being output from each of the dispensers 114, respectively, different parts of the three-dimensional rib 36 having a different modulus of elasticity and a different strength may be produced. It should be appreciated that such a three-dimensional printing system is disclosed in U.S. Patent No. 8,481,241 to Napadensky et al., the entire disclosure of which is hereby incorporated by reference.

Referring to FIG. 8, the present invention provides a method 200, according to one embodiment of the present invention, of making a three-dimensional component such as the three-dimensional rib 36 for the crash test dummy 12. The method 200 starts in bubble 202 and advances to block 204. In block 204, the method 200 includes the step of providing a three-dimensional printer or printing system 110. The method 200 advances to block 206 and includes the step of making a CAD model of the component. In one embodiment, a CAD model of the component such as the three-dimensional rib 36 was made to allow the 3D printer to print in one model. The method 200 advances to block 208 and includes the step of printing, by the three-dimensional printer or printing system 110, the three-dimensional component such as the rib 36 with two layers 40, 42 of a band material and a layer 46 of damping material sandwiched in between the layers 40, 42 of the band material in one printing.

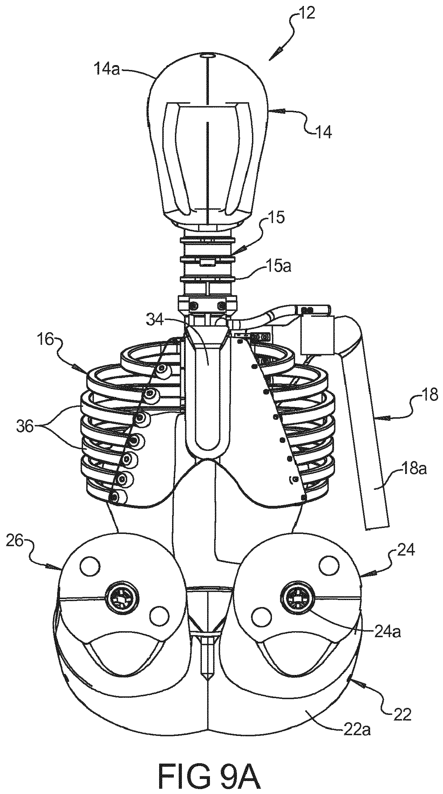

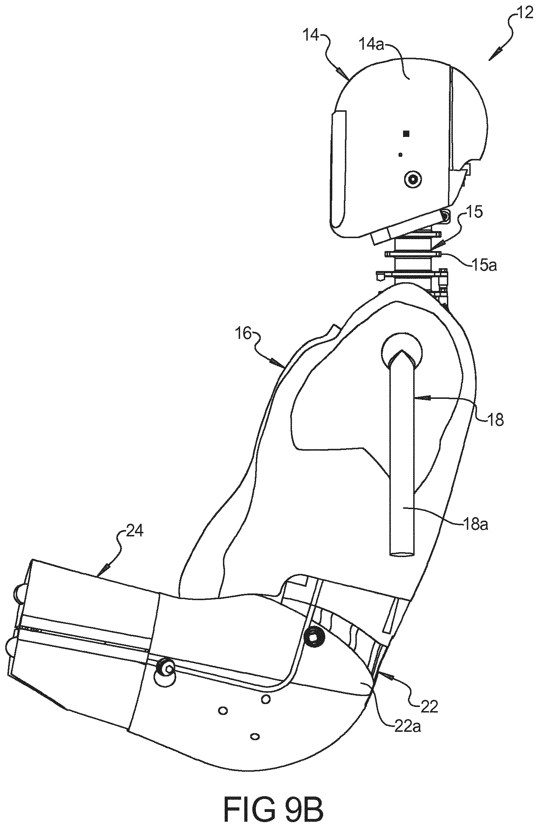

Referring to FIGS. 9A and 9B, one embodiment of the crash test dummy 12 includes three-dimensional printed components such as subcomponents of the head assembly 14, spine assembly 15, rib cage assembly 16, left arm assembly 18, right arm assembly 20, pelvis assembly 22, left leg assembly 24, and right leg assembly 26. In one embodiment, the subcomponents for the head assembly 14 are the skull 14a and brain. In one embodiment, the subcomponents for the spine assembly 15 are the discs 15a. In one embodiment, the subcomponents for the rib cage assembly 16 are the three-dimensional ribs 36 and the sternum 34. In one embodiment, the subcomponents for the left arm assembly 18 and right arm assembly 20 are the arm bones 18a. In one embodiment, the subcomponents for the pelvis assembly 22 are the pelvis 22a and pelvis bones. In one embodiment, the subcomponents for the left leg assembly 24 and right leg assembly 26 are the leg bones 24a. It should be appreciated that the subcomponents are formed by the three-dimensional printing process previously described.

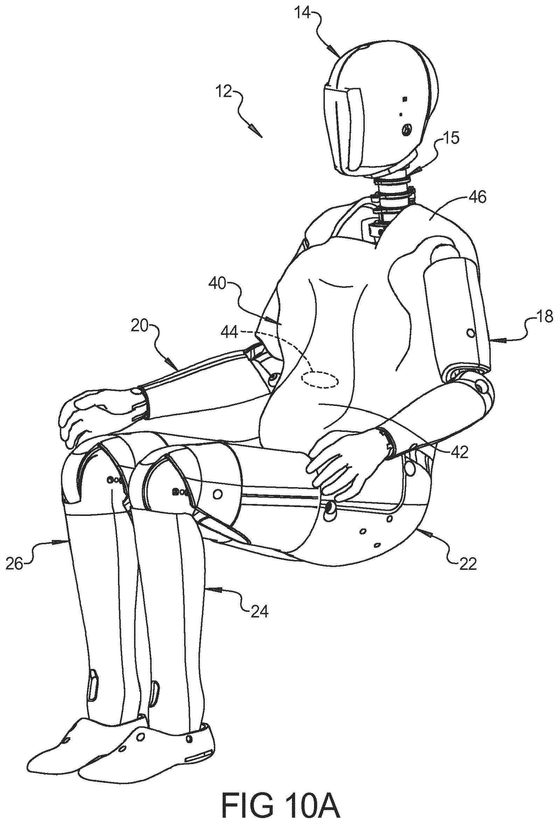

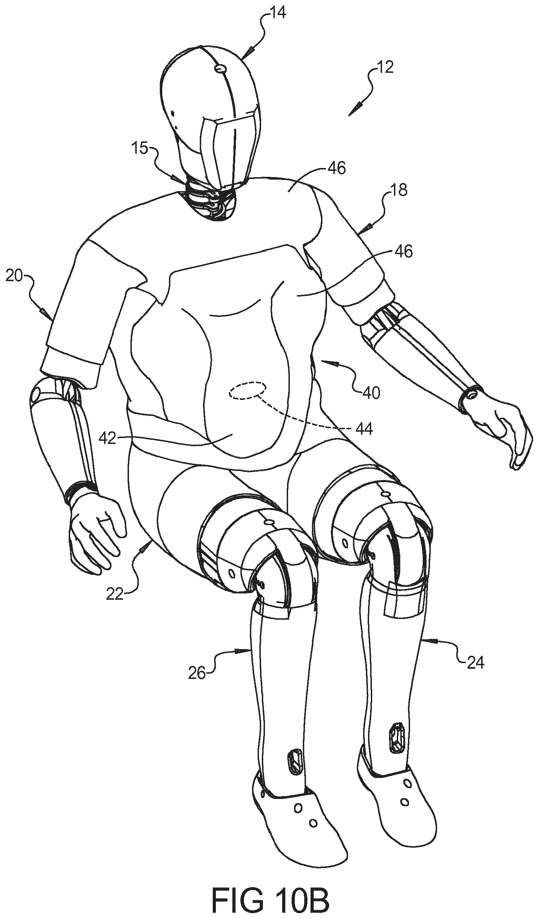

Referring to FIGS. 10A and 10B, one embodiment of the crash test dummy 12 includes three-dimensional printed components such as subcomponents of the internal organ assembly 40, according to the present invention. The internal organ assembly 40 is at least partially disposed in the rib cage assembly 16 and the pelvis assembly 22. The internal organ assembly 40 includes a three-dimensional abdominal or organ sac 42 having one or more three-dimensional internal organs 44 to measure regional pressures for a crash test dummy 12 that provides for evaluation of potential abdominal injuries during vehicle crash testing. In one embodiment, the three-dimensional internal organs 44 represent the liver, stomach, spleen, small intestine, and colon. The organ sac 42 is a continuous bag that contains the three-dimensional internal organs and holds the three-dimensional internal organs 44 in place. The organ sac 42 is made of an elastomeric material and molded about the three-dimensional internal organs 44. The organ sac 42 has a portion disposed in the rib cage assembly 16 between the sternum and the spine box and a portion disposed in a cavity of the pelvis assembly 22. It should be appreciated that the subcomponents are formed by the three-dimensional printing process previously described. It should also be appreciated that the three-dimensional internal organs 44 are located in the crash test dummy 12 based on locations from radiology. It should further be appreciated that the three-dimensional internal organs 44 are disposed or contained within the organ sac 42. It still should further be appreciated that the three-dimensional internal organs 44 have sensors (not shown) to measure regional pressures for the crash test dummy 12 that communicate with an electronic controller (not shown) and provide for evaluation of potential abdominal injuries during vehicle crash testing.

The internal organ assembly 40 further includes an abdominal muscle layer 46 to hold the organ sac 42 in place. The muscle layer 46 is a layer covering the organ sac 42. The muscle layer 46 is made of an elastomeric material. It should be appreciated that the muscle layer is a subcomponent formed by the three-dimensional printing process previously described. It should also be appreciated that the muscle layer 46 provides human-like interaction with vehicle restraints.

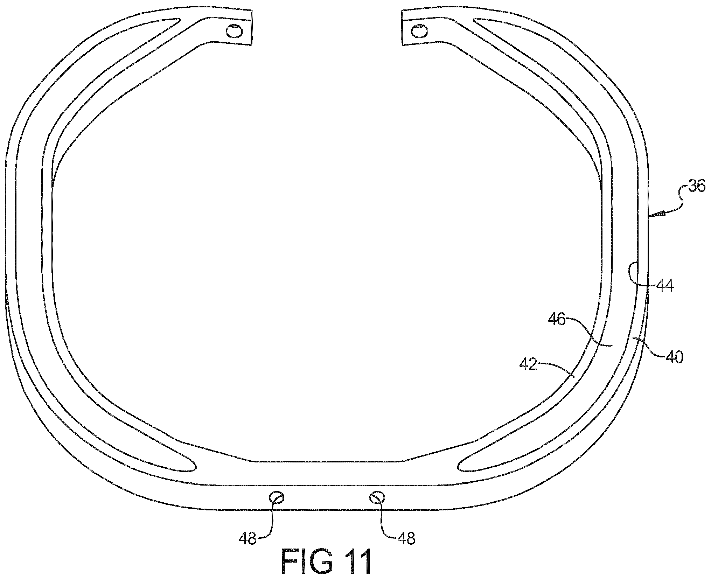

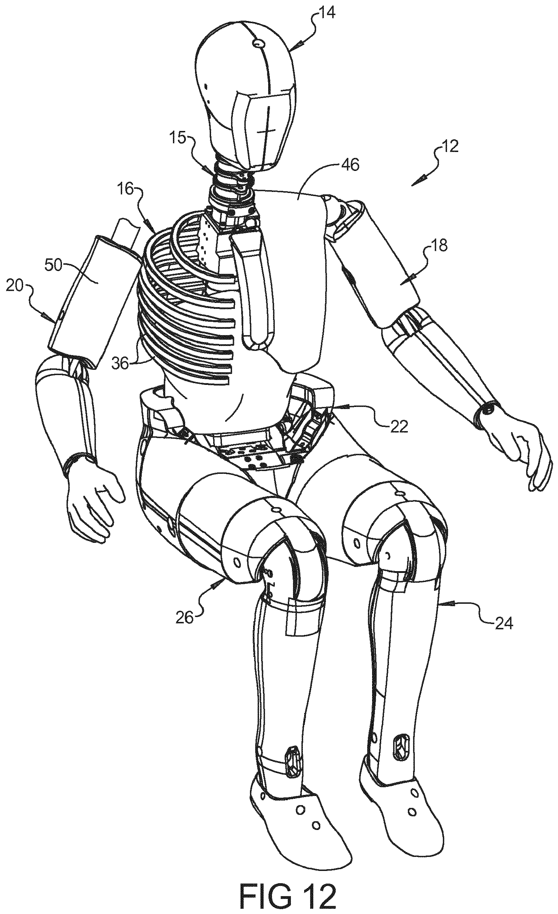

Referring to FIG. 11, one embodiment of the three-dimensional printed components such as one of the three-dimensional ribs 36 is shown. In one embodiment of the crash test dummy 12 illustrated in FIG. 12, three-dimensional printed components such as subcomponents or structures like the three-dimensional printed ribs 36, flesh 50, and muscle layer 46 are shown. It should be appreciated that most of the components illustrated are made by the three-dimensional printing process.

Accordingly, the three-dimensional printing process of the present invention provides the ability to design structures, shapes, and combination of materials to be able to adjust the performance, shorten design cycles, and increase biofidelity of all crash test dummies such as the crash test dummy 12 in use today and in the future. Using the three-dimensional printing process, the rib 36 and the rib cage assembly 16 of the present invention has ribs 36 are even more humanlike than in the past. Due to the advantage of the three-dimensional printing of two different materials in one printing, the ribs 36 can be created and adjusted to include hysteresis or damping that can be increased to make the ribs 36 more humanlike than ever before.

The present invention has been described in an illustrative manner. It is to be understood that the terminology, which has been used, is intended to be in the nature of words of description rather than of limitation.

Many modifications and variations of the present invention are possible in light of the above teachings. Therefore, the present invention may be practiced other than as specifically described.

## Claims

1. A three-dimensional printed component of a crash test dummy comprising:
at least one material; and
wherein said at least one material is printed by three-dimensional printing from a CAD model to form the three-dimensional printed component for different performance requirements for the crash test dummy.

2. A three-dimensional printed component as set forth in claim 1 wherein said material is FDM Thermoplastics or Polyjet Photopolymers.

3. A three-dimensional printed component as set forth in claim 1 or claim 2 wherein the three-dimensional printed component comprises a subcomponent of one of a head assembly, a neck assembly, a rib cage assembly, an arm assembly, a pelvis assembly, an internal organ assembly, and a leg assembly.

4. A method of making a three-dimensional printed component of a crash test dummy, said method comprising the steps of:
providing a three-dimensional printer;
making a CAD model of the component for the crash test dummy;
printing, by the three-dimensional printer, from the CAD model at least one material to form a three-dimensional component for different performance requirements of the crash test dummy.

5. A method as set forth in claim 4 wherein the material is FDM Thermoplastics or Polyjet Photopolymers.

6. A method as set forth in claim 4 or claim 5 wherein the three-dimensional printed component comprises a subcomponent of one of a head assembly, a neck assembly, a rib cage assembly, an arm assembly, a pelvis assembly, an internal organ assembly, and a leg assembly.

7. A crash test dummy comprising:
a body;
an assembly operatively attached to said body;
said assembly including a plurality of three-dimensional printed components, each of said three-dimensional printed components being made of at least one material; and
wherein said at least one material is printed by three-dimensional printing from a CAD model to create said three-dimensional printed components for different performance requirements for the crash test dummy.

8. A crash test dummy as set forth in claim 7 wherein said material is FDM Thermoplastics or Polyjet Photopolymers.

9. A crash test dummy as set forth in claim 7 or claim 8 wherein said three-dimensional components comprises subcomponents of a head assembly.

10. A crash test dummy set forth in any one of claims 7 to 9 wherein said three-dimensional components comprise subcomponents of a neck assembly.

11. A crash test dummy as set forth in any one of claims 7 to 10 wherein said three-dimensional components comprise subcomponents of an arm assembly.

12. A crash test dummy as set forth in any one of claims 7 to 11 wherein said three-dimensional components comprise subcomponents of a thorax assembly.

13. A crash test dummy as set forth in any one of claims 7 to 13 wherein said three-dimensional printed components comprise subcomponents of an internal organ assembly.

14. A crash test dummy as set forth in any one of claims 7 to 13 wherein said three-dimensional printed components comprise subcomponents of a pelvis assembly.

15. A crash test dummy as set forth in any one of claims 7 to 14 wherein said three-dimensional printed components comprise subcomponents of a leg assembly.
